# EUROPEAN PATENT APPLICATION

(11) **EP 2 469 220 A1**
(43) Date of publication of application: **27.06.2012**
(21) Application number: 11193874.2
(22) Date of filing: 15.12.2011
(51) Int. Cl.: G01B 5/255, G01B 7/315, G01B 11/275, G01B 13/195, G01B 21/26, G01B 21/24

(54) **Apparatus and method for measuring the alignment of a hub assembly**

(30) Priority: 22.12.2010 GB 201021664
(71) Applicant: Land Rover, Gaydon Warwick Warwickshire CV35 0RR (GB)
(72) Inventor: Chambers, Shawn, Whitley CV3 4LF Coventry (GB)
(74) Representative: Ditum, Caroline Mary

(57) **Abstract**

A method of measuring the alignment of a hub surface (32) relative to a rotational axis (15) of the hub (14) which may be installed in a knuckle hub assembly (10). The method comprises rotating the hub (14) about the rotational axis (15) to cause the hub surface (32) to rotate; measuring deviations (53) in an axial direction of the rotating hub surface (32) at a plurality of positions (A,B,C) offset from the rotational axis (15); and determining from the measured deviations the alignment of the hub surface (32) relative to the rotational axis (15) of the hub (14).

## Description

The present invention relates to the manufacture of wheel hub assemblies for motor vehicles. In particular, though not exclusively, the invention relates to a method of characterising the alignment of a hub surface relative to a rotational axis of an associated hub, to help ensure optimal performance of the hub and assembly.

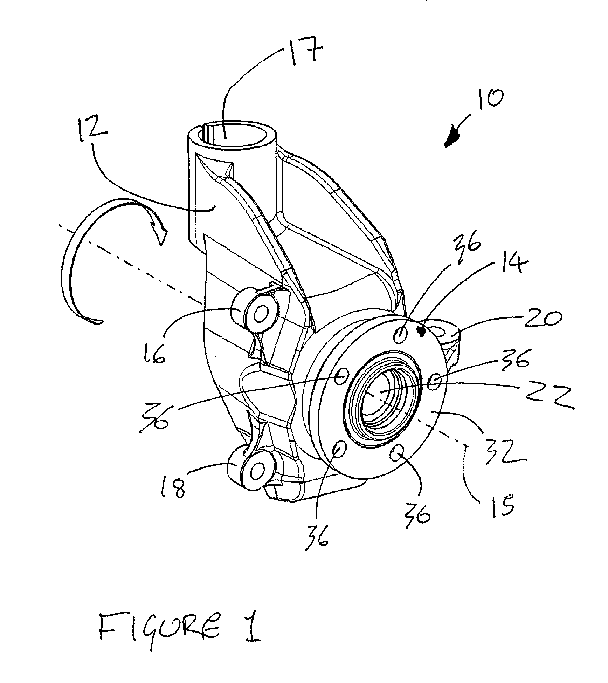

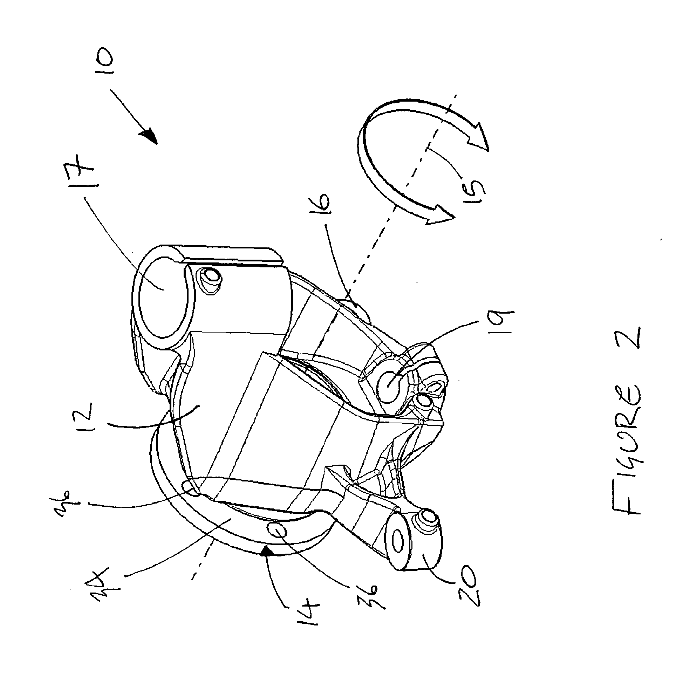

A conventional knuckle hub assembly 10 is shown in Figures 1 and 2. The knuckle hub assembly 10 comprises a knuckle 12 and a conventional wheel hub 14. The hub 14 is mounted in a first generation bearing. The bearing is obscured in Figures 1 and 2 by the hub 14. Alternatively, the hub 14 may be part of a second or a third generation bearing assembly. The bearing, or bearing assembly, sits within a complementary shaped circular bore in the knuckle 12 to enable the hub 14 to rotate about a rotational axis 15. The knuckle 12 forms part of a front axle strut-type suspension system and bolts to a vehicle (not shown) via a strut (not shown) mounted in an upper split circular bore 17, a lower arm (not shown) which mounts in a lower split circular bore 19 and a steering arm (not shown) which mounts to a vertical bolt hole 20. When assembled, the assembly 10 defines an opening 22 through which, in use, a drive shaft (not shown) extends and engages with the hub 14. The bearing and hub 14 are held on the knuckle 12 by a hub nut (not shown) which screws on to the drive shaft, thereby securing the hub 14 and bearing to the assembly 10.

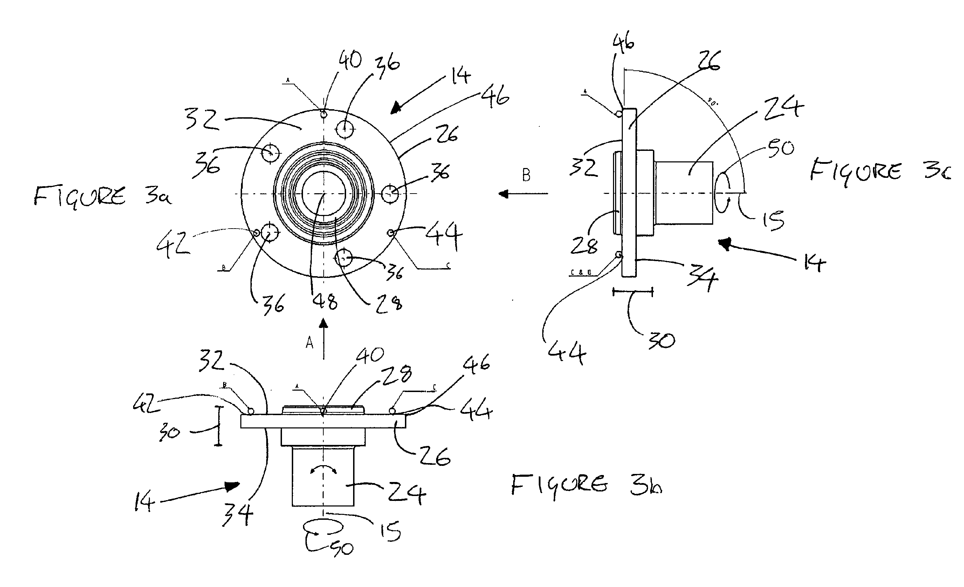

Figures 3a, 3b and 3c are views of the hub 14 shown in Figures 1 and 2 in isolation from the knuckle hub assembly 10. The hub 14 comprises a tubular member 24 and an annular flange 26. The flange 26 extends outwardly from the tubular member 24, and is slightly inboard of a first end 28 of the tubular member 24. The wall of the tubular member 24 has a thick wall portion 30 in the region of the flange 26 where the wall of the tubular member 24 is slightly thicker to increase the strength of the hub 14. The inner surface of the wall of the tubular member 24 comprises splines (not shown) arranged to engage with a drive shaft. The flange 26 has an outer flange surface 32 and an inner flange surface 34, and bolt holes 36 which extend from the outer flange surface 32 to the inner flange surface 34 to accommodate wheel bolts (not shown) for attaching a brake rotor (not shown) and a wheel (not shown) to the hub 14. Conventionally, the drive shaft rotates about its axis to drive a wheel mounted on the hub 14.

It is known that problems such as increased brake wear, reduced vehicle drivability and uneven braking may be caused by deviations of the outer flange surface as it rotates in use. The rotational derivation of the outer flange surface is known in the art as axial "run-out". The problems associated with run-out are discussed in United States Patent Application Publication No. US 2001/0045770 A1.

Although solutions have been proposed to mitigate the effects of run-out, the problems of increased brake wear, reduced drivability and uneven braking remain. Therefore, it is an object of the invention to further reduce or eliminate these problems.

It has now been recognised by the inventors that the alignment of the hub flange surfaces relative to the axis of rotation of the hub is critical to ensuring stable braking, even brake wear and maintaining driveability. Any variation from the desired optimum alignment will result in the problems described above.

Against this background, from a first aspect, the invention resides in a method of characterising the alignment of a hub surface relative to a rotational axis of the hub, the method comprising rotating the hub about the rotational axis to cause the hub surface to rotate; measuring deviations in an axial direction of the rotating hub surface at a plurality of positions offset from the rotational axis; and determining from the measured deviations the (overall or mean) alignment of the hub surface relative to the rotational axis of the hub. For the avoidance of doubt, "axial direction" refers to any direction parallel to the rotational axis of the hub.

Accordingly, the invention provides a method to accurately describe the alignment of a surface of a hub relative to its rotational axis. The rotational axis is preferably the axis about which the hub rotates when installed and loaded in situ. In a preferred embodiment of the invention, the hub surface is a hub flange surface. As a result, the alignment of the flange may be checked quickly and easily during manufacture or assembly of the knuckle hub assembly, which increases the speed, and lowers the cost, of production.

According to a preferred embodiment, the method comprises comparing a deviation measured at a first position of the plurality of positions against a deviation measured at a second position of the plurality of positions. The plurality of positions may preferably comprise three or more positions. Advantageously, the method may comprise comparing deviations at first, second and third positions of the plurality of positions.

The measuring step may comprise obtaining a set of measurements at each position of the plurality of positions, and may further comprise calculating a mean deviation of each set of measurements for subsequent comparison as set out above. Localised imperfections or errors introduced in the manufacturing process of the hub may lead to variations in the flatness and run-out of the surface of the hub. Taking the mean deviation of a set of measurements and comparing the mean deviations mitigates the effect of any such local imperfections or errors.

Preferably, the measured deviations may be compared with values representing a desired alignment of the hub surface, wherein a difference between the measured deviations and the values may indicate that the hub surface is not in the desired alignment with the rotational axis. The values may be in the form of ranges that are indicative of a maximum allowable variation from the desired alignment. The desired alignment of the hub surface may be perpendicular to the rotational axis of the hub.

Since the invention enables the alignment of the hub surface relative to the rotation axis to be accurately determined, corrective machining of the hub may be carried out. As mentioned above, it is noted that prior art methods of machining a hub may result in an incorrectly aligned hub surface. Accordingly, the method may further comprise machining the hub if the comparison of the measured deviations against the values representing a desired alignment of the hub surface indicates that the hub surface is not in the desired alignment. The machining may advantageously be corrective and based on the determined alignment of the hub surface.

As aforesaid, the axial direction of measurement of the deviations is parallel to the rotational axis of the hub. The positions of the plurality of positions may be equally radially spaced, preferably around the rotational axis. One or more of the positions of the plurality of positions may be adjacent to an edge of the surface. Preferably, the distances between each position of the plurality of positions and the rotational axis are equal.

Each position of the plurality of positions may be fixed relative to the location of the rotational axis, and each position of the plurality of positions may be fixed relative to each of the other positions of the plurality of positions.

In order to account for any flaws in a bearing, knuckle or hub that may result in a misaligned hub surface when the components of a knuckle hub assembly are assembled, the above method may advantageously be performed on the hub while it is mounted in a knuckle hub assembly such that the deviations are measured in situ. The invention therefore also provides the ability to remedy any errors in a knuckle hub assembly as a whole that may impact on the alignment of the hub surface.

To simulate the conditions under which the hub is used, a load may be applied to the assembly. The load may be applied across the assembly by tightening a nut on a shaft that extends through the assembly. Alternatively, the load may be applied by an expanding mandrel or a collet.

The invention also extends, from a second aspect, to apparatus for characterising the alignment of a hub surface, the apparatus comprising a rotational member arranged to rotate the hub surface about a rotational axis of the hub; at least one sensor arranged to measure a deviation of the rotating hub surface in an axial direction at each of a plurality of positions; and determining from the measured deviations the alignment of the hub surface relative to the rotational axis of the hub.

Preferably, the apparatus comprises machining apparatus for machining the hub surface. Additionally, the apparatus may comprise a clamping member, for example, a shaft and nut, a mandrel or a collet, for applying a load across a hub assembly.

Within the scope of this application it is envisaged that the various aspects, embodiments, examples, features and alternatives set out in the preceding paragraphs, in the claims and/or in the following description and drawings may be taken independently or in any combination thereof. Features described in connection with one embodiment are applicable to all embodiments except where there is incompatibility of features.

The invention will now be described by way of example with reference to the accompanying drawings of which:
Figure 1 is a perspective view of a conventional knuckle hub assembly from a first direction;
Figure 2 is a perspective view of the conventional knuckle hub assembly of Figure 1 from a second direction opposite to the first direction,
Figure 3a is a front view of the hub of the knuckle hub assembly of Figures 1 and 2, for use in a method in accordance with the invention;
Figure 3b is a first side view of the hub of Figure 3a in the direction of arrow A shown in Figure 3a;
Figure 3c is a second side view of the hub of Figures 3a and 3b in the direction of arrow B shown in Figure 3a;
Figure 4a is a side view of a first further hub on which a method in accordance with the invention is performed;
Figures 4b, 4c and 4d are graphs which illustrate the results obtained from a surface of the first further hub of Figure 4a from a first sensor, a second sensor and a third sensor respectively, as shown in Figure 3a;
Figure 5a is a side view of a second further hub on which a method in accordance with the invention is performed;
Figures 5b, 5c and 5d are graphs which illustrate the results obtained from a surface of the second further hub of Figure 5a from the first sensor, the second sensor and the third sensor respectively;
Figure 6a is a side view of a third further hub on which a method in accordance with the invention is performed;
Figures 6b, 6c and 6d are graphs which illustrate the results obtained from a surface of the third further hub of Figure 6a from the first sensor, the second sensor and the third sensor respectively; and
Figure 7 illustrates apparatus and a technique for performing the invention and correcting misalignment of a surface of a hub, if necessary.

An embodiment of a method of characterising the alignment of the hub surface 32 of the conventional hub 14 relative to its rotational axis 15, according to the invention, is described below.

In this embodiment, for optimal performance of the hub 14, it is desired that the plane of the hub surface 32 be perpendicular to the rotational axis 15 of the hub 14. Accordingly, the hub 14 is rotated about its rotational axis 15 to cause the hub surface 32 to rotate, which in this embodiment is the outer flange surface 32 of the flange 26. As the hub surface 32 rotates, deviations in an axial direction of the rotating hub surface 32 are measured by sensors A, B, C at each of three positions 40, 42, 44 offset from the rotational axis 15 and lying in a single plane perpendicular to the rotational axis. The alignment of the hub surface 32 relative to the rotational axis 15 of the hub 14 is then determined from the measured deviations.

Referring specifically to Figures 3a, 3b and 3c, a first sensor A is arranged to measure the deviation of the outer flange surface 32 at a first position 40; a second sensor B is arranged to measure the deviation of the outer flange surface 32 at a second position 42; and a third sensor C is arranged to measure the deviation of the outer flange surface 32 at a third position 44. The sensors A, B, C are measuring devices capable of measuring deviations in the order of microns (10⁻⁶m).

The positions 40, 42, 44 are arranged adjacent to the outer edge 46 of the outer flange surface 32, wherein the distance between each position 40, 42, 44 and the rotational axis 15 is the same, and the positions 40, 42, 44 are equally radically spaced. Alternatively, the sensors A, B, C may be positioned elsewhere on the outer flange surface 32. For simplicity, since there are three positions 40, 42, 44 in this example, the radial separation between each position and its adjacent position is 120°. Having the sensors A, B, C at these positions 40, 42, 44 enables easy interpretation of the results obtained by the sensors A, B, C. The sensors A, B, C are calibrated so that they measure the deviation in a direction parallel to the rotational axis 15.

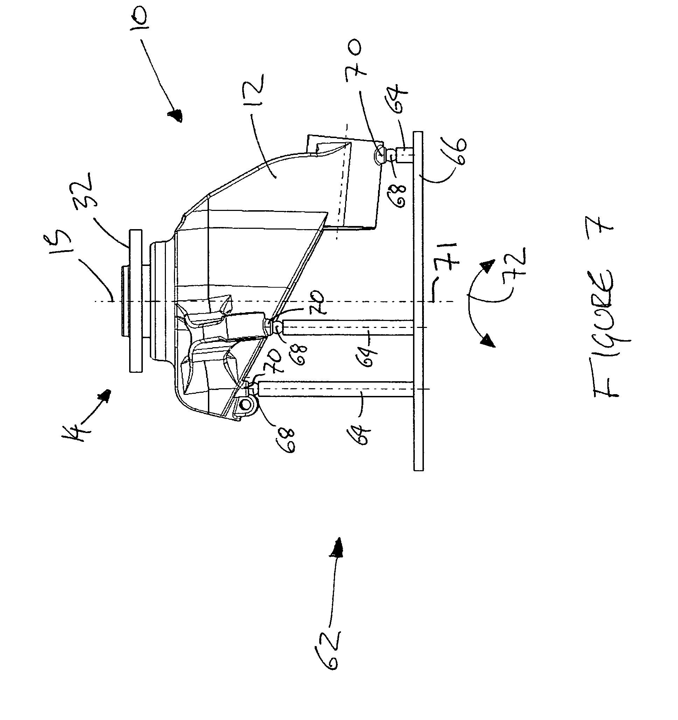

The hub 14 is rotated about the rotational axis 15 as indicated by the arrow 50. In order to rotate the hub 14 under operational conditions, the hub 14 is mounted in a knuckle hub assembly 10, such as that shown in Figures 1 and 2, which is positioned on a mount 62, as shown in Figure 7 and discussed further below. A shaft (not shown) is engaged with the splines of the hub 14, and the hub 14 is secured to the shaft using a hub nut (not shown) which applies a load to the assembly 10. Alternatively, the shaft may be a non-splined shaft and the load may be applied by a clamping force, which may instead be applied by an expanding mandrel or a collet. The shaft incorporates a flexible joint to eliminate transverse forces. Thus the assembly 10 is pre-loaded as it would be on a vehicle with only rotational forces acting on the hub.

As the hub 14 rotates, a circular portion of the outer flange surface 32 moves through the position 40, 42, 44 measured by each sensor A, B, C. Each sensor A, B, C measures the deviation along an axis parallel to the rotational axis 15 as the hub 14 rotates. The measurements obtained by each sensor A, B, C are recorded against the radial position of the portion. Consequently, each sensor A, B, C measures and records a set of measurements for each sensor A, B, C.

In order to obtain a full set of results the outer flange surface 32 is rotated about 360°. To ensure accuracy, the deviation may be measured and recorded over several full rotations of the hub 14. To ensure that measurements continue to be taken in the event of sensor failure, further sensors may also record deviations.

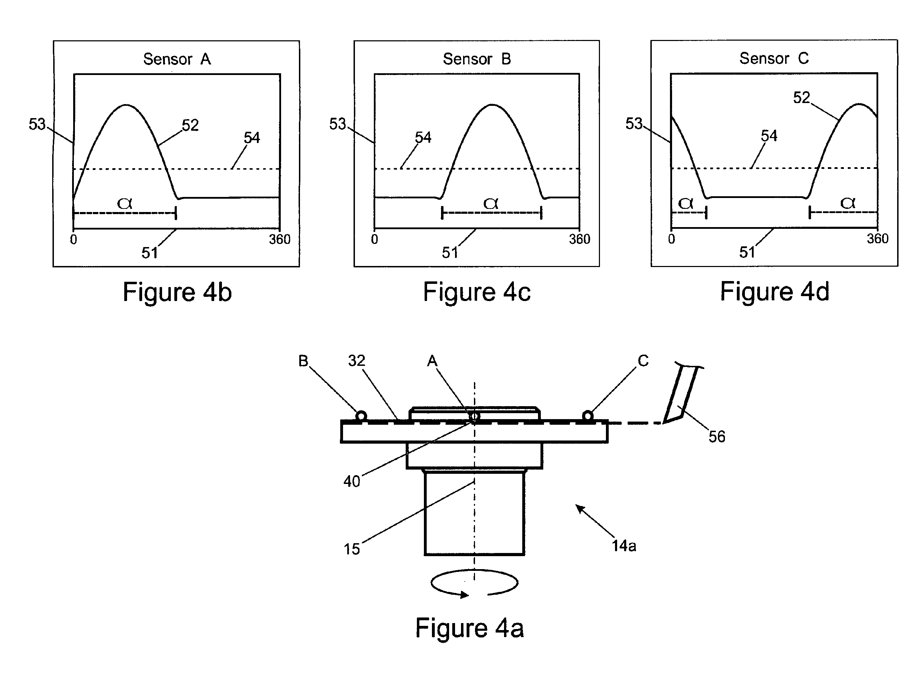

Figures 4b to 4d show in graphical form a set of measurements taken by the first, second and third sensors A, B, C respectively for a first further hub 14a shown in Figure 4a. The first hub 14a has all the features of the conventional hub 14; therefore, the same reference numerals are used for the first further hub 14a. Figure 4b is a graph that shows the set of measurements taken by the first sensor A. The circular portion of the outer flange surface 32 that moves through the first position 40 covered by sensor A is represented on the graph's x-axis 51 from 0° to 360°. The y-axis 53 represents the location of the outer flange surface 32. Typically the unit of measurement is microns (10⁻⁶m).

Each measurement of deviation taken by sensor A is plotted against its radial position. A solid line 52 represents the set of measurements. The rise and fall of the solid line 52 in the sections of the portion indicated by α signify that the outer flange surface 32 is not flat. A dashed line 54 represents the mean of the measurements taken by sensor A. Figures 4c and 4d are similar graphs that show the sets of measurements taken by the second sensor B and the third sensor C respectively.

The mean of the sets of measurements for the outer flange surface 32, i.e. the mean deviations, is the same for each sensor A, B, C. This indicates that the outer flange surface 32 of the hub 14a is perpendicular to the rotational axis 15 of the hub 14a. Therefore, the outer flange surface 32 is correctly aligned, and furthermore no corrective positioning of the hub assembly is required prior to machining.

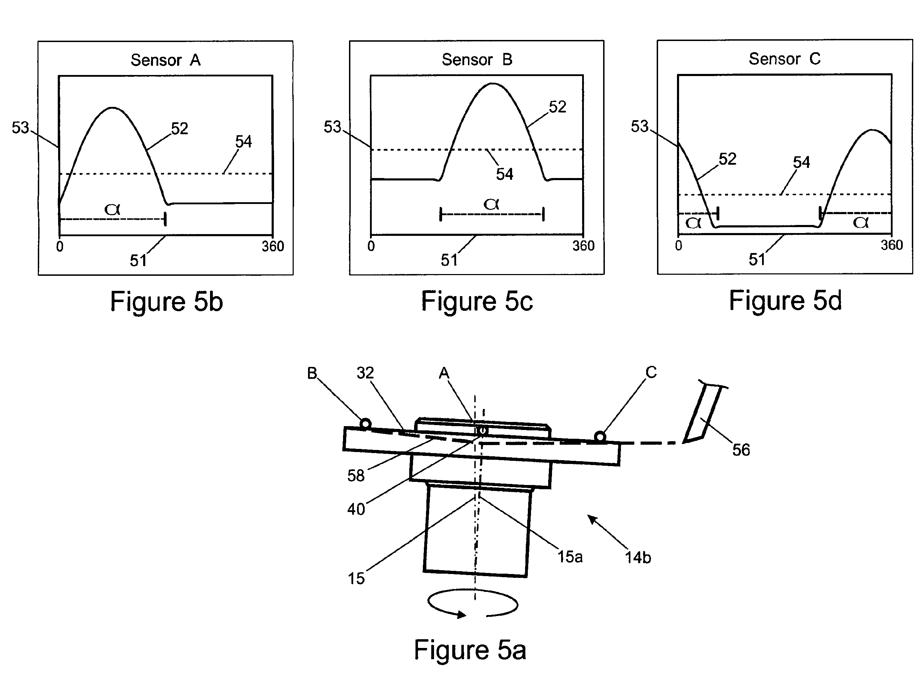

Turning to Figures 5a to 5d, the position of the outer flange surface 32 of a second further hub 14b, shown in Figure 5a, is measured as described above. The second further hub 14b has the same features as the conventional hub 14; therefore, the same reference numerals are used. Figures 5b to 5d are graphs similar to those described above, which show the measurements obtained by the sensors A, B, C respectively for the second further hub 14b. As indicated in Figures 5b to 5d, the means of the measurements for the outer flange surface 32 are different for each position 40, 42, 44. Thus the mean deviation measured by the second sensor B is higher that that of the first sensor A, while the mean deviation measured by the third sensor C is lower than that measured by the first sensor A.

The results illustrated in Figures 5b to 5d indicate that the second further hub 14b is misaligned. Namely, the results show that the outer flange surface 32 is not perpendicular to the rotational axis 15 of the hub 14b, and that the outer flange surface 32 is tilted towards a first side. In fact, the outer flange surface 32 is perpendicular to a false axis 15a. Machining the outer flange surface 32 in this orientation using the cutter 56 would result in a concave outer flange surface 32, as illustrated by a concave dashed line 58. The concave shape of the outer flange surface 32 occurs because the cutter path is set perpendicular to the rotational axis 15, not the false axis 15a. Corrective positioning of the hub 14b is required to bring the false axis 15a in line with the expected axis 15 and hence prevent a concave outer flange surface 32.

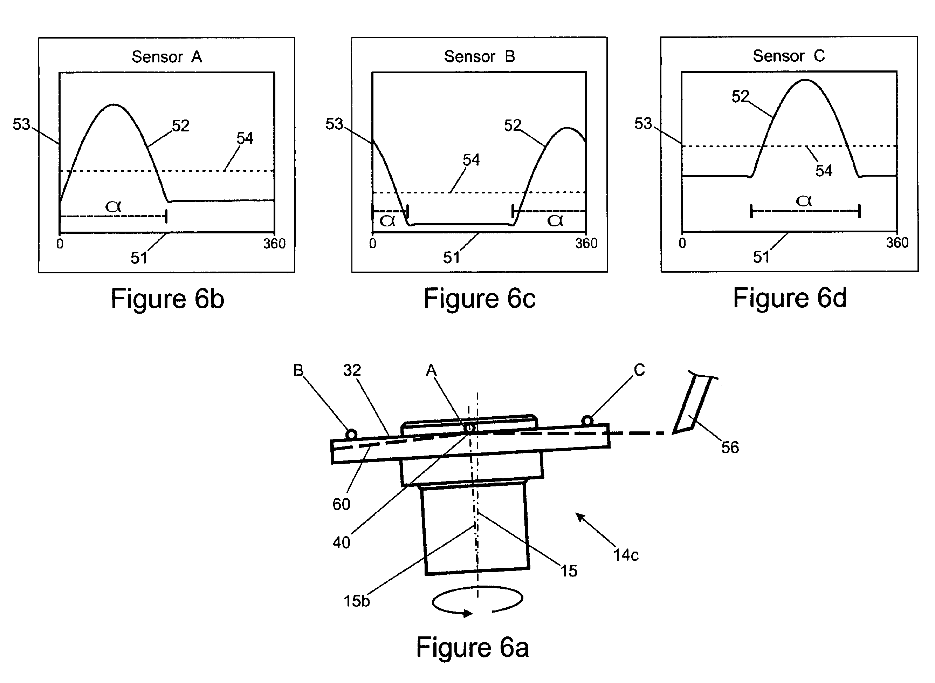

Turning to Figures 6a to 6d, the position of the outer flange surface 32 of a third further hub 14c, shown in Figure 6a, is measured as described above. The third further hub 14b has the same features as the conventional hub 14; therefore, the same reference numerals are used. Figures 6b to 6d are graphs which show the measurements obtained by the first, second and third sensors A, B, C respectively for the third further hub 14c. As indicated in Figures 6b to 6d, the means of the measurements for the outer flange surface 32 are different for each position 40, 42, 44. Thus the mean deviation measured by the second sensor B is lower than that of the first sensor A, while the mean deviation measured by third sensor C is higher than that measured by the first sensor A.

The results illustrated in Figures 6b to 6d indicate that the third further hub 14c is misaligned. Namely, the results show that the outer flange surface 32 is not perpendicular to the rotational axis 15 of the hub 14c, and that the outer flange surface 32 is tilted towards a second side. In fact, the outer flange surface 32 is perpendicular to a false axis 15b. Machining the outer flange surface 32 in this orientation using the cutter 56 would result in a convex outer flange surface 32, as illustrated by a convex dashed line 60. A convex outer flange surface 32 occurs because the cutter path is set perpendicular to the rotational axis 15, not the false axis 15b. Corrective positioning of the hub 14c is required to bring the false axis 15b in line with the expected axis 15 and hence prevent a concave outer flange surface 32.

As mentioned above, in order to rotate the hub 14 under operational conditions, the hub 14 is mounted in a knuckle hub assembly 10. Machining of the outer flange surface 32 to correct any misalignment, and if necessary run-out, of the outer flange surfaces 32 discussed above, is performed with the knuckle hub assembly 10 positioned on the mount 62, as shown in Figure 7.

The mount 62 has three shafts 64 extending from a platform 66, each shaft 64 terminating in a spherical member 68 that acts as a seat on which a casting datum 70 of the knuckle 12 is seated.

The platform 66 is arranged to tilt in any direction relative to a vertical axis 71 that is perpendicular to the path of a cutting tool. The tilting action may be provided by a gimble (not shown) that allows the platform 66 and therefore the assembly 10 to pivot in any direction about the gimble. As an example, the platform 66 and assembly 10 pivots in the directions indicated by the arrow 72.

For the second further hub 14b and the third further hub 14c, where the outer flange surface 32 is not in the desired alignment to the rotational axis 15, i.e. it is not perpendicular, the misalignment may be corrected by machining of the outer flange surface 32 using the above apparatus.

To correct the misaligned hub 14b, 14c, the assembly 10 is orientated on the mount 62 so that the plane of the outer flange surface 32 is parallel to the direction of travel of a cutting tool (not shown). The outer flange surface 32 is then machined by the cutting tool while the platform 66 pivots about the gimble until the rotational axis 15 of the hub 14 is perpendicular to the outer flange surface 32. For example, if the plane of the outer flange surface 32 is at an angle of 91° to the rotational axis 15 of the hub 14, the platform 66 is pivoted through 1° before machining the outer flange surface 32 to compensate for the misalignment. Depending on the configuration of the cutting tool, the hub 14 may or may not rotate during the machining process.

In the specific example described herein, measurements are taken at three positions 40, 42, 44. This is the minimum number of positions required to characterise the alignment of the hub surface relative to the rotational axis of the hub. Alternatively, if the alignment of the hub surface is required along one axis of the plane of the surface, measurements may be taken at two positions only.

Furthermore, the invention is not limited to hubs 14, 14a, 14b, 14c which include bolt holes 36. Alternatively, the invention may be applied to a hub comprising wheel studs instead of bolt holes 36.

In general, the present invention may be embodied in other specific forms without departing from its essential attributes. For example, the invention may be applied to hubs for other types of suspension systems, for front or rear axles. Accordingly, reference should be made to the appended claims and other general statements herein rather than to the foregoing specific description as indicating the scope of the invention.

## Claims

1. A method of characterising the alignment of a hub surface relative to a rotational axis of the hub, the method comprising:
rotating the hub about the rotational axis to cause the hub surface to rotate;
measuring deviations in an axial direction of the rotating hub surface at a plurality of positions offset from the rotational axis; and
determining from the measured deviations the alignment of the hub surface relative to the rotational axis of the hub.

2. The method of Claim 1, wherein the method comprises comparing a deviation measured at a first position of the plurality of positions against a deviation measured at a second position of the plurality of positions.

3. The method of Claim 1 or 2, wherein the step of measuring deviations comprises obtaining a set of measurements at each position of the plurality of positions, and calculating the mean deviation of each set of measurements.

4. The method of any preceding claim, wherein the method comprises comparing the measured deviations against values representing a desired alignment of the hub surface, wherein a difference between the measured deviations and the values indicate that the hub surface is not in the desired alignment.

5. The method of Claim 4, wherein the desired alignment of the hub surface is perpendicular to the rotational axis of the hub.

6. The method of Claim 4 or 5, wherein the method further comprises machining the hub if the comparison of the measured deviations against the values representing a desired alignment of the hub surface indicates that the hub surface is not in the desired alignment.

7. The method of any preceding claim, wherein the positions of the plurality of positions are equally radially spaced.

8. The method of any preceding claim, wherein one or more of the positions of the plurality of positions are adjacent to an edge of the surface.

9. The method of any preceding claim, wherein the distances between each position of the plurality of positions and the rotational axis are equal.

10. The method of any preceding claim, wherein each position of the plurality of positions is fixed relative to the location of the rotational axis.

11. The method of any preceding claim, wherein each position of the plurality of positions is fixed relative to each of the other positions of the plurality of positions.

12. The method of any preceding claim, wherein the hub is mounted in a knuckle hub assembly and the deviations are measured in situ.

13. The method of Claim 12, wherein a load is applied to the assembly.

14. The method of Claim 13, wherein the load is applied by tightening a nut on a drive shaft that extends through the assembly.

15. Apparatus for characterising the alignment of a hub surface, the apparatus comprising:
a rotational member arranged to rotate the hub surface about a rotational axis of the hub;
at least one sensor arranged to measure a deviation of the rotating hub surface in an axial direction at each of a plurality of positions; and
determining from the measured deviations the alignment of the hub surface relative to the rotational axis of the hub.
